## Europäisches Patentamt
## European Patent Office
## Office européen des brevets

(11) Numéro de publication: **0 168 072**
**A2**

## (12) DEMANDE DE BREVET EUROPEEN

(21) Numéro de dépôt: **85200744.2**

(22) Date de dépôt: **10.05.85**

(51) Int. Cl.⁴: **G 05 D 7/01**
**F 16 K 3/26**

(30) Priorité: **11.05.84 BE 2060414**

(43) Date de publication de la demande:
**15.01.86 Bulletin 86/3**

(84) Etats contractants désignés:
**DE FR GB NL**

(71) Demandeur: **Van de Moortele, Guido**
**Oosterveldlaan 71**
**B-2610 Anvers (Wilrijk)(BE)**

(72) Inventeur: **Van de Moortele, Guido**
**Oosterveldlaan 71**
**B-2610 Anvers (Wilrijk)(BE)**

(74) Mandataire: **Ottelohe, Jozef René**
**Bureau Ottelohe J.R. Postbus 3 Fruithoflaan 105**
**B-2600 Antwerpen (Berchem)(BE)**

(54) **Régulateur de débit pour liquides et gaz.**

(57) L'invention concerne un régulateur de débit relativement compact, simple et précis pour liquides ou gaz dont le débit peut être réglé entre des valeurs relativement faibles et élevées et dont la vitesse d'écoulement reste pratiquement constante malgré la différence de pression. Ce régulateur de débit peut être appliqué, par exemple, à un dispositif de protection pour conduites d'eau.

Dans le régulateur de débit, entre les ouvertures d'adduction et d'évacuation (2-7), est monté un disque de réglage (9) à forages de passage (10), contre lequel disque est placée une tête de réglage (16) à ouverture (19). Un axe rotatif (11) est prévu pour l'obtention d'une distorsion entre le disque de réglage et la tête de réglage et de l'ajustement de l'ouverture (19) devant un forage de passage (10) choisi. Une canalisation d'évacuation (23) est prévue dans l'axe rotatif (11) pour évacuer le liquide ou gaz vers l'ouverture d'évacuation (7) et une membrane de réglage (27) est montée sur la tête de réglage (16) pour la fermeture partielle ou totale de l'ouverture d'obturation (26) de la canalisation (23), afin de maintenir constante le pression en amont et en aval du forage de passage (10) utilisé.

Fig. 1

EP 0 168 072 A2

- 1 -

Régulateur de débit pour liquides et gaz.

L'invention concerne un régulateur de débit relativement compact, simple et précis pour liquides ou gaz dont le débit peut être réglé entre des valeurs relativement faibles et élevées et dont la vitesse d'écoulement reste pratiquement constant malgré la différence de pression. Ce régulateur de débit peut être appliqué, par exemple, à un dispositif de protection pour conduites d'eau.

Selon la caractéristique principale de l'invention, le régulateur de débit se compose principalement d'un boîtier fermé à ouvertures d'adduction et d'évacuation, une fermeture placée dans le boîtier entre les ouvertures d'adduction et d'évacuation, un disque de réglage à plusieurs forages de passage de diamètres différents, lequel disque possède un diamètre plus petit que le diamètre intérieur du boîtier et est placé à une distance de la fermeture dans la partie du boîtier dans laquelle débouche l'ouverture d'adduction, une tête de réglage avec une ouverture et placée contre le disque de réglage, un axe de rotation passant par la fermeture et destiné à l'obtention d'une distorsion entre le disque de réglage et la tête de réglage et de l'ajustement d'un forage de passage choisi du disque de réglage avec l'ouverture de la tête de réglage, une canalisation d'évacuation pourvue dans l'axe de rotation pour l'évacuation du liquide ou du gaz de l'ouverture de la tête de réglage vers l'ouverture d'évacuation du boîtier, et une membrane de réglage placée sur la tête de réglage et entre l'ouverture d'adduction du boîtier et un espace limité par la membrane et la tête de réglage dans lequel débouchent l'ouverture de la tête de réglage et une ouverture d'obturation de la canalisation d'évacuation, laquelle membrane peut fermer partiellement ou entièrement pour maintenir constante la différence de pression en amont et en aval du forage de passage étant utilisé.

Comme il ressortira de la description ci-dessous, par cette construction il est obtenu que, selon que l'ouverture d'échappement de la tête de réglage est tournée devant un des forages de passage plus grands ou plus petits du disque de réglage, le débit augmente ou diminue, mais que la membrane de réglage opérant de concert avec l'ouverture d'obturation de la canalisation d'évacuation de l'axe de rotation fait toujours en sorte que la vitesse d'écoulement réglée du liquide ou du gaz reste toujours inchangée, et ce malgré la différence variable de la pression qui peut régner dans le régulateur de débit.

A titre d'exemple, sans aucun caractère limitatif, suit ci-dessous une description plus détaillée d'une réalisation choisie d'un régulateur de débit conforme à l'invention. Cette description renvoie au dessin annexé, dans lequel :

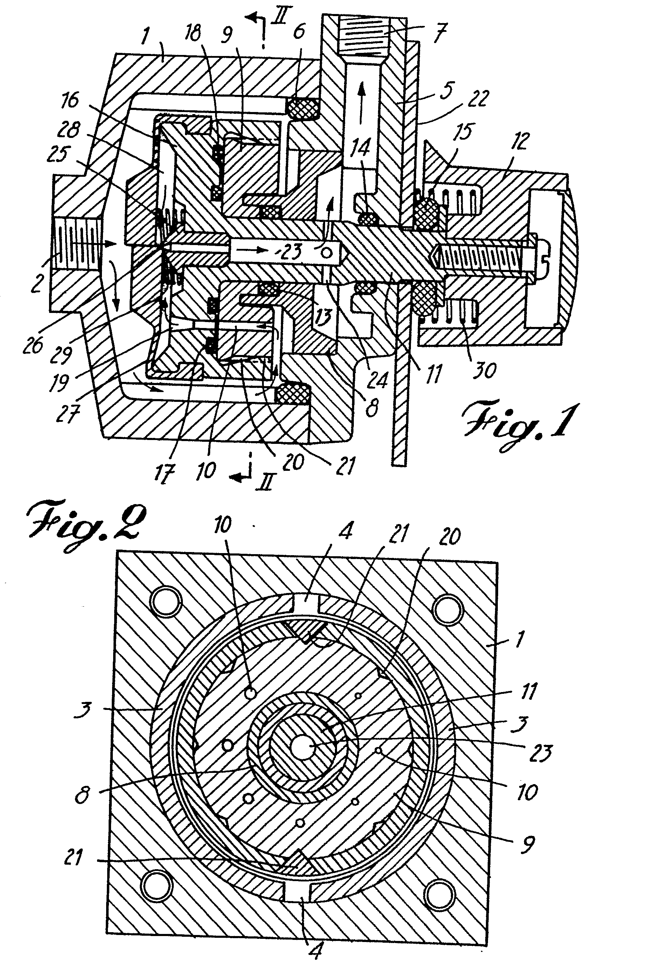

la fig. 1 représente une coupe longitudinale du régulateur de débit;
la fig. 2 représente une coupe transversale suivant la ligne II-II de la fig. 1.

Dans ces figures, on remarque que le régulateur de débit possède un boîtier 1 avec une ouverture d'adduction 2 et dans lequel sont montés deux demi-segments 3 à une certaine distance l'un de l'autre de sorte que sont formées deux rainures d'évacuation 4 s'étirant suivant l'axe longitudinal du boîtier. Le boîtier 1 est fermé au moyen d'un couvercle 5 et d'un anneau d'étanchéité 6, lequel couvercle possède une ouverture d'évacuation 7 par laquelle le liquide entrant via l'ouverture d'adduction 2 et le long des pièces détachées décrites ci-dessous est évacué. L'ouverture d'adduction 2 est séparée de l'ouverture d'évacuation 7 par une fermeture 8, qui est serrée dans le couvercle 5. Sur la fermeture 8 est fixé un disque de réglage 9 dirigé vers l'ouverture d'adduction 2 et dont le diamètre est plus petit que le diamètre intérieur du boîtier 1. Ce disque de réglage est monté de telle manière sur la fermeture 8 que le liquide ou le gaz entrant dans le boîtier 1 puisse passer derrière ce disque de réglage. Dans ce disque de réglage sont prévus plusieurs forages de passage 10 de diamètres différents qui déterminent chacun un débit déterminé. A travers ledit couvercle 5, la fermeture 8 et le disque de réglage 9 passe un axe rotatif 11 y placé sur lequel est fixé un bouton de réglage 12 pour faire tourner l'axe. Entre cet axe et les pièces précitées dans lesquelles il est placé, un anneau d'étanchéité 13 est placé pour la fermeture hermétique entre elles des parties de boîtier dans lesquelles débouchent respectivement l'ouverture d'adduction 2 et l'ouverture d'évacuation 7. De même, un anneau d'étanchéité 14 est prévu entre les pièces précitées pour la fermeture étanche de l'axe 11 dans le boîtier 1, de sorte que de l'eau ne peut pas filtrer hors de ce boîtier. Un anneau élastique 15 et un ressort de pression 30 exercent une pression axiale sur le bouton de réglage 12 et sur l'axe 11, de sorte que toutes les parties constituantes sont tirées les unes contre les autres. L'autre extrémité dudit axe débouche sur un bouton de réglage 16, dont la surface intérieure adhère au disque de réglage 9 par l'intermédiaire d'un anneau d'étanchéité élastique 17. Un semblable anneau d'étanchéité 18 est placé diamètralement vis-à-vis de l'anneau 17 afin d'obtenir une étanchéité et une pression équivalentes entre la tête de réglage 16 et le disque de réglage 9. Cette tête de réglage 16 est pourvue d'une ouverture 19, qui, quand on tourne l'axe 11, est placée devant un des forages de passage 10 du disque de réglage 9, et ce selon le débit voulu. Sur la périphérie du disque de réglage 9, deux nervures d'ajustement 21 de matière de préférence élastique et qui font partie de la tête de réglage 16 s'emboîtent. Ces nervures d'ajustement 21 s'emboîtent dans les rainures d'ajustement 20 du disque de réglage 9, le nombre de rainures d'ajustement concordant avec le nombre de positions dans lesquelles la tête de réglage 16 peut être tournée. Pour la lecture du débit choisi, une plaque à échelle 22 est montée sous le bouton de réglage 12 sur le couvercle 5. Dans l'axe rotatif 11 est prévue une canalisation d'évacuation 23, dont une extrémité débouche dans plusieurs ouvertures 24 disposées en rayon, par quoi ladite canalisation est mise en communication avec l'ouverture d'évacuation 7 du boîtier 1, et l'autre extrémité est pourvue d'une embouchure 25 interchangeable avec une ouverture d'obturation 26. Sur la périphérie de la tête de réglage 16 est montée avec une résistance déterminée une membrane de réglage élastique 27, qui entoure un espace 28, dans lequel débouche l'ouverture d'obturation 26 de l'embouchure 25 et qui peut obturer cette dernière ouverture 26. Entre la membrane de réglage et la tête de réglage 16 est monté un ressort de pression 29, qui dans la position de repos du régulateur de débit repousse la membrane de réglage de l'ouverture d'obturation 26.

En cas d'emploi normal du régulateur de débit, le liquide ou le gaz entrant par l'ouverture d'adduction 2 du boîtier 1 va vers l'arrière du disque de réglage 9, entre dans le forage de passage 10 réglé, sort par l'ouverture 19 placée en face, entre dans l'espace 28 et quitte le boîtier 1 par l'ouverture d'obturation 26, la canalisation d'évacuation 23 et l'ouverture d'évacuation 7 du boîtier 1.

Si toutefois une différence se produit entre la pression du liquide ou du gaz qui se trouve en amont du forage de passage 10 employé et la pression du liquide ou du gaz qui se trouve en aval de ce forage et si cette différence de pression devient plus grande que la résistance de la membrane de réglage 27 et du ressort de pression 29, la membrane sera poussée par le liquide ou le gaz entrant par l'ouverture d'adduction 2 vers ou sur l'ouverture d'obturation 26, par quoi le débit vers la canalisation d'évacuation 23 est diminué ou même réduit à zéro. Si la différence entre la pression en amont et en aval du forage de passage 10 diminue et devient trop faible pour maintenir la membrane de réglage 27 sur l'ouverture d'obturation 26, cette ouverture sera libérée, par suite de quoi un plus grand débit sera obtenu via le forage de passage 10. Par suite de cela, la différence de pression augmente de nouveau, de sorte que la pression sur la membrane de réglage 27 redevient suffisante pour amener la membrane dans la position voulue vis-à-vis de l'ouverture d'obturation 26. De cette manière se crée via le forage de passage 10 une différence constante de pression qui est égale à la force de la membrane de réglage 27 et du ressort de pression 29 divisée par la surface efficace de la membrane de réglage, par suite de quoi on obtient une vitesse constante dans le forage de passage 10 et par conséquent un débit constant.

Il va de soi que le régulateur de débit décrit ci-dessus peut avoir n'importe quelle forme et quelles dimensions et qu'il a diverses possibilités d'application. Il va également de soi que certaines des pièces constituantes décrites ci-dessus peuvent être remplacées par d'autres qui poursuivent le même but et qu'également leur placement mutuel peut différer à condition de rester dans le cadre de l'invention.

R E V E N D I C A T I O N S

---

1.- Régulateur de débit pour liquides ou gaz caractérisé par le fait qu'il se compose principalement d'un boîtier fermé (1) à une ouverture d'adduction et une ouverture d'évacuation (2-7), avec fermeture (8) placée dans le boîtier (1) entre les ouvertures d'adduction et d'évacuation (2-7), un disque de réglage (9) avec plusieurs forages de passage (10) de diamètres différents, lequel disque a un diamètre plus petit que le diamètre intérieur du boîtier (1) et est placé à une distance de la fermeture (8) dans la partie du boîtier dans laquelle débouche l'ouverture d'adduction (2), une tête de réglage (16) avec une ouverture (19) et placée contre ledit disque de réglage (9), un axe de rotation (11) passant par la fermeture (8) et destiné à l'obtention d'une distorsion entre le disque de réglage (9) et la tête te réglage (16) et de l'ajustement d'un forage de passage (10) choisi en face du disque de réglage (9) avec l'ouverture (19) de la tête de réglage (16), une canalisation d'évacuation (23) prévue dans l'axe de rotation (11) pour l'évacuation du liquide ou du gaz de l'ouverture (19) de la tête de réglage (16) vers l'ouverture d'évacuation (7) du boîtier (1), et une membrane de réglage (27) placée sur la tête de réglage (16) et entre l'ouverture d'adduction (2) du boîtier (1) et un espace (28) limité par la membrane et la tête de réglage dans lequel débouchent l'ouverture (19) de la tête de réglage et une ouverture d'obturation (26) de la canalisation d'évacuation (23), laquelle membrane peut fermer partiellement ou entièrement l'ouverture d'obturation (26) pour maintenir constante la différence de pression en amont et en aval du forage de passage (10) étant utilisé.

2.- Régulateur de débit conforme à la revendication 1, caractérisé par le fait que le disque de réglage (9) à plusieurs forages de passage (10) est monté d'une manière fixe

0168072

- 7 -

dans le boîtier (1).

3.- Régulateur de débit conforme à la revendication 1, caractérisé par le fait que la tête de réglage (16) avec l'ouverture (19) fait partie d'un axe rotatif (11) placé dans le disque de réglage (9) et le boîtier (1), lequel axe est pourvu, en dehors du boîtier, d'un bouton de réglage (12), qui opère de concert avec une plaque à échelle (22) placée sur le boîtier (1) pour la lecture du débit réglé.

4.- Régulateur de débit conforme à la revendication 3, caractérisé par le fait que la tête de réglage (16) s'emboîte sur la périphérie du disque de réglage (9) et qu'entre ceux-ci sont prévues des rainures (20) et au moins une rainure d'ajustement (21) s'y emboîtant pour la mise au point de l'ouverture d'évacuation (19) de la tête de réglage (16) vis-à-vis d'un des forages de passage (10) choisis du disque de réglage (9).

5.- Régulateur de débit conforme à la revendication 1, caractérisé par le fait que la membrane de réglage (27) est montée sur la périphérie de la tête de réglage (16) et à une certaine distance de la surface plane de cette tête de réglage pour former un espace fermé (28).

6.- Régulateur de débit conforme à la revendication 5, caractérisé par le fait qu'entre la membrane de réglage (27) et la tête de réglage (16) est placé un ressort de pression (29).

7.- Régulateur de débit conforme à la revendication 3, caractérisé par le fait que dans l'axe rotatif (11) est prévue une canalisation d'évacuation (23) qui débouche d'un côté dans un espace (28) fermé par la membrane de réglage et qui se trouve de l'autre côté en communication avec l'ouverture d'évacuation (7) du boîtier (1).

0168072

8.- Régulateur de débit conforme à la revendication 7, caractérisé par le fait que dans l'ouverture d'obturation (26) de la canalisation d'évacuation (23) qui débouche dans l'espace (28) fermé par la membrane de réglage (27) est montée une embouchure (25) interchangeable.

Fig.1

Fig.2

0168072